# EUROPEAN PATENT APPLICATION

(11) **EP 4 368 830 A1**
(43) Date of publication of application: **15.05.2024**
(21) Application number: 22207139.1
(22) Date of filing: 14.11.2022
(51) Int. Cl.: F03D 9/25, F03D 15/20, H02K 7/18

(54) **GENERATOR FOR WIND TURBINE**

(71) Applicant: Siemens Gamesa Renewable Energy A/S, 7330 Brande (DK)
(72) Inventor: George, Ajoe, 686004 Kerala - India (IN); Jayaraman, Saravanan, 7430 Ikast (DK); Jensen, Simon Vyff, 7160 Tørring (DK); Vogt, Hansfrieder, 7120 Vejle Øst (DK)
(74) Representative: SGRE-Association

(57) **Abstract**

The invention relates to a wind turbine (1) comprising a nacelle (3) and a wind rotor (5) with blades (3), and where a generator (10) is positioned within the nacelle (3) comprising a rotor (11) connected to the wind rotor (5) and a stator (12), where the generator (10) is mounted such that the rotor (11) is positioned eccentric relative to the stator (12) in the absence of gravity and load.

The invention further relates to the method to install the generator accordingly.

## Description

### Field of invention

The present invention relates to the protection of the generator in wind turbines bay ensuring a minimum air gap between rotor and stator despite heavy load.

### Background

Generators, such as direct drive generators for wind turbines, operate with a relatively small airgap between the rotor and the stator. The rotor and the stator include permanent magnets, electromagnetic windings, combinations thereof, or other magnetic devices arranged to provide a magnetic flux across the airgap sufficient to generate electricity.

It is desirable to have a small an airgap as the magnetic force is inversely related to the square of the distance between rotor and stator. Decreasing the size of the airgap increases the magnetizing current, which is the amount of current needed to drive the magnetic flux through the air gap. The greater the number of poles on the generator, the greater the number of times the flux must cross the air gap for each revolution.

The weight of elements like the blades and the wind rotor itself is however substantial and tend to drag the elements downwards by gravity when mounted.

The risk under substantial wind loads however is that the rotor and stator come in direct contact damaging the generator.

The airgap therefore needs to be maintained at a sufficient size to avoid the risk of contact.

The present invention relates to increase efficiency by allowing the introduction of a smaller airgap.

### Summary

The object of the invention is solved according to the features and methods indicated in the claims.

This includes introducing a wind turbine comprising a nacelle and a wind rotor with blades, and where a generator comprising a rotor connected to the wind rotor and a stator is positioned within the nacelle, characterized in that, the generator is mounted such that the rotor tilts in the absence of gravity and load.

The rotor may be mounted such that it in the absence of gravity and load it is positioned eccentric but is concentric under the presence of gravity but no load.

The rotor may be mounted such that it in the absence of gravity and load tilts reversely (or positively) to the tilt induced by the presence of gravity.

The rotor may be mounted such that it in the absence of gravity and load tilts reversely to the tilt induced by the presence of gravity, but in the presence of gravity, the rotor is substantially eccentric to the stator.

The tilting of the rotor relative to the stator may be achieved by adjusting the segment during tightening by tilt-adjusting means.

The tilting of the rotor relative to the stator may be ensured by machining a fixed shaft recess with eccentricity instead of concentricity.

The present invention further relates to the method to mount a generator in the nacelle of a wind turbine, the generator comprising a rotor connected to a wind rotor with blades and a stator, and where the method includes for the generator to be positioned within the nacelle, such that the rotor tilts in the absence of gravity and load.

The rotor may be mounted such that it in the absence of gravity and load it tilts reversely (or positively) to the tilt induced in the presence of gravity.

The rotor may be mounted such that in the absence of gravity and load it tilts reversely (or positively) to the tilt induced by the presence of gravity, but in the presence of gravity the stator is substantially eccentric to the rotor.

The tilting of the rotor relative to the stator may be achieved by adjusting the segment during tightening by tilt-adjusting means.

The tilting of rotor relative to the stator may be ensured by machining a fixed shaft recess with eccentricity instead of concentricity.

### Brief Description of the Drawings

- Figure 1: shows a schematic presentation of a general wind turbine
- Figure 2A: shows a schematic presentation of a generator with fixed stator and a rotor connected to a wind rotor.
- Figure 2B: shows a schematic presentation the generator rotor tilting relative to the fixed stator under influence of gravity and load on the wind rotor.
- Figure 3: shows a schematic presentation of the rotor within the generator when installed concentric as in prior installations, respectively also showing the effect of gravity and load
- Figure 4: shows the effect of different azimuth angles of the blades to the eccentric installation of the rotor relative to the stator in prior installations.
- Figure 5: shows a schematic presentation of the rotor within the generator when installed eccentric, respectively also showing the effect of gravity and load
- Figure 6: shows a side view schematic presentation of the rotor within the generator when installed eccentric with higher air gap at the top.
- Figure 7: shows a flow chart of the method of the present invention.

### Detailed Description

The illustrations in the drawings are schematic. It is noted that in different figures, similar or identical elements are provided with the same reference signs.

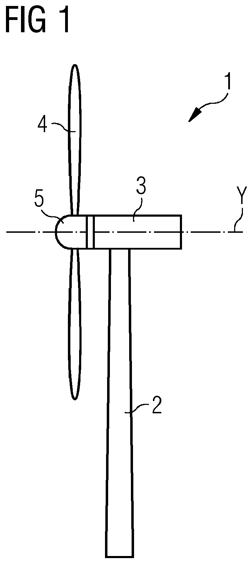

**Figure 1** shows an embodiment wind turbine 1 positioned in the water, such as the ocean. The wind turbine 1 comprises a tower 2 mounted on a non-depicted fundament. A nacelle 3 is arranged on top of the tower 2. The wind turbine 1 further comprises a wind rotor 5 having two, three or more blades 4 (in the perspective of Figure 1 only two blades 4 are visible). The wind rotor 5 is rotatable around a longitudinal rotation axis Y. The wind turbine 1 comprises an electric generator.

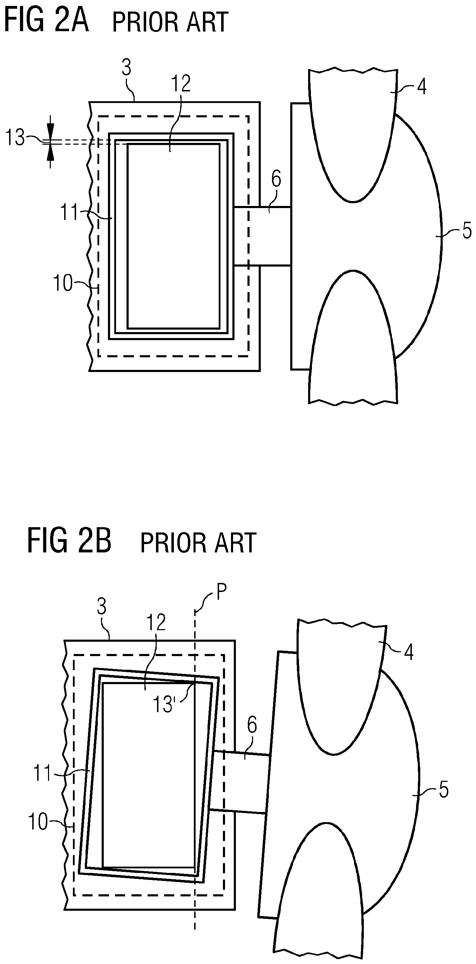

**Figure 2A** illustrates a generator 10 comprising a rotor 11 connected to the wind rotor 5, and a stator 12 fixedly positioned within the nacelle 3. The wind turbine 1 in the illustrated embodiment is a direct drive wind turbine where the wind rotor 5 is directly connected to the generator 10, without any gearbox arranged in-between. The rotation of the blades 4 due to the wind is directly transmitted to the generator 10 via a shaft 6 connected to the wind rotor 5. When the wind turbine 10 is in operation, the generator 10 converts wind energy into electrical energy.

A small airgap 13 exists between the rotor 11 and stator 12. The rotor 11 and the stator 12 include permanent magnets, electromagnetic windings, combinations thereof, or other magnetic devices arranged to provide a magnetic flux across the airgap 13 sufficient to generate electricity.

The weight of elements like the blades 4 and the wind rotor 5 itself is however substantial, and when mounted, the gravity tends to drag the elements downwards, as also illustrated in **figure 2B****.**

In the illustration, the stator 12 is substantially concentric relative to the rotor 11, the two parts extending essentially in parallel.

It is desirable to have as small an airgap 13 as the magnetic force is inversely related to the square of the distance between rotor 11 and stator 11. Decreasing the size of the airgap 13 increases the magnetizing current, which is the amount of current needed to drive the magnetic flux through the air gap. The greater the number of poles on the generator, the greater the number of times the flux must cross the air gap for each revolution.

However, having a small airgap 13 (possible in the order of millimeters or a few centimeters), this quickly forms a problem when the rotor 11 tilts relative to the stator. This is also illustrated in figure 2B showing that the airgap 13 is changed as the rotor 11 tilts slightly relative to the stator 12.

In the present context, and as illustrated in fig. 2B, the rotor 11 tilts negatively relative to the stator 12, where a negative tilt in the present is defined as the direction of tilt as is induced by of gravity.

This leads to a reduced airgap 13' which may be close to zero, or zero, such that the part touches.

In the present the reduced airgap 13' is defined as being the minimum airgap 13 in the circumference of the stator 12 seen in the plane P of the end phase of the stator 12 proximal to the wind rotor 5.

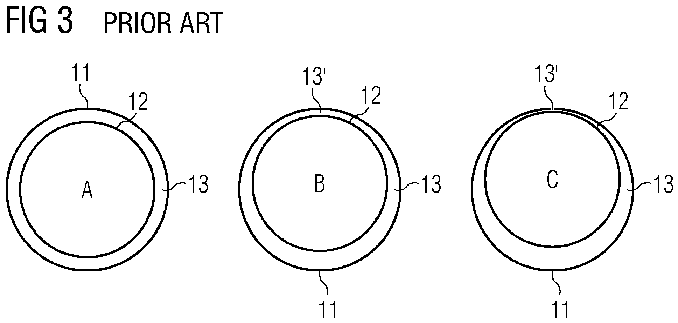

**Figure 3** illustrates how the generators 10 in present systems are assembled with a substantially concentric nominal airgap 13 (A). Once assembled with the wind rotor 5 in idling state the rotor 11 tilts slightly relative to the stator 12 due to gravity, the rotor 11 thus 'forming' the reduced airgap 13'.

According to the present defined location according to the plane P, the minimum reduced airgap 13' is expected to be at the upper part of the circumference of the stator 12.

A further reduction of the reduced airgap 13' is expected due to wind loads (C).

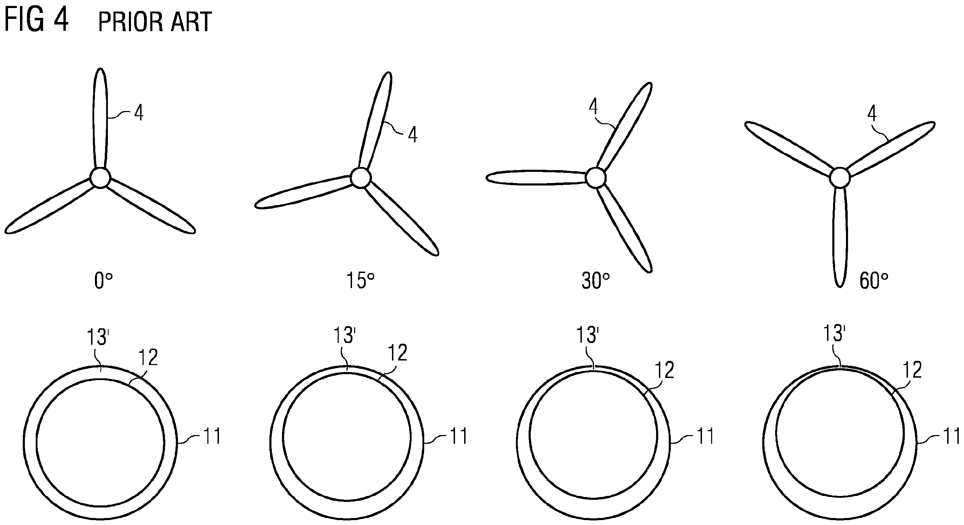

**Figure 4** illustrates the reduced airgap 13' under load at different wing 4 positions, 0°, 15°, 30°, 60°, where the angles of rotation are defined in a clockwise rotation relative to an upper wing 4, such that an upper blade 4 rotation of 0° corresponds to the blade 4 in azimuth position pointing straight upwards.

As can be seen, the reduced airgap 13' under load is largest at 0° angle but is then continuously reduced at rotations until a rotation of 60° where one of the blades 4 are pointing straight downwards.

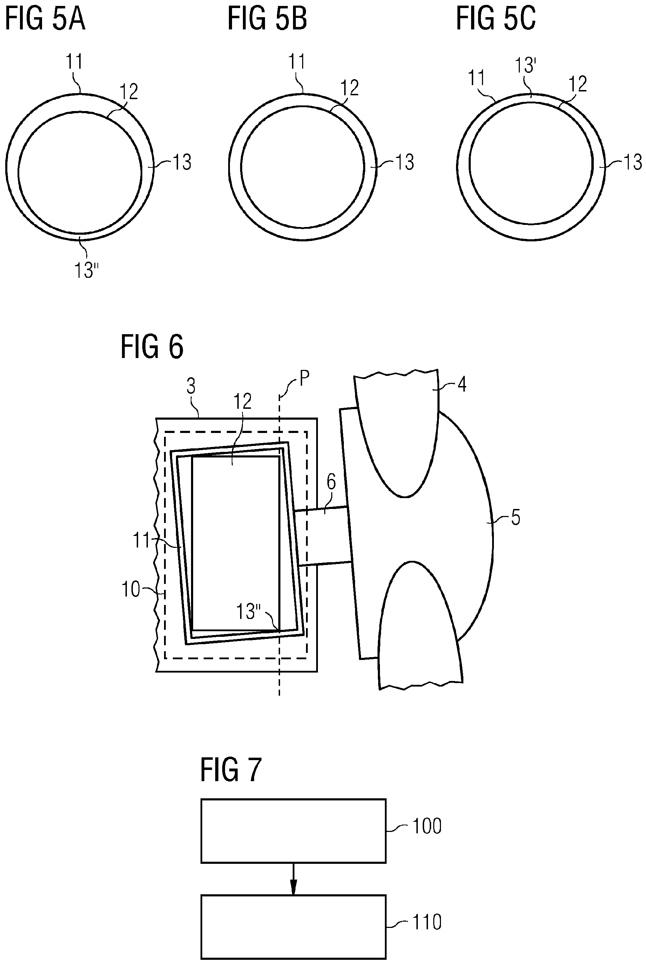

**Figure 5A** illustrates the solution according to the present invention, where the generator 10 is assembled with a concentric stator 12 relative to the rotor 13. The generator 10 in the illustrated embodiment solution is assembled such that without load or gravity the rotor 11 and stator is positioned eccentric relative to each other, the rotor 11 tilting positively relative to the gravity induced tilting, the negative direction of tilt. The stator 12 and rotor 12 thus is mounted non-concentric, or eccentric, or non-parallel to each other defined in the absence of gravity.

In the illustration a reduced airgap 13'' is formed at the lower part of the generator 10 below the stator 12 seen in the location of the defined plane P.

**Figure 5B** illustrates an embodiment where the positive tilt is such that in idle state under no load, but under gravity of the hub/rotor 5 and blades 4, the stator 12 will be positioned substantially concentric with the rotor 11, corresponding to them extending essentially in parallel.

**Figure 5C** illustrates the generator 10 under load where the reduced airgap 13' is formed at the upper part above the stator 12. Though there still is a reduced airgap 13', it is substantially smaller than when assembling concentrically as illustrated in fig. 3.

**Figure 6** is a side view of the situation as illustrated in fig. 5A, where the generator 10 is assembled such that without load or gravity, the rotor 11 tilts positively relative to the gravity induced tilting. The rotor 11 and stator 12 thus extend non-parallel to each other.

In the illustration a reduced airgap 13" is formed at the lower part of the generator 10 below the stator 12 again seen in the plane P.

**Figure 7** is a flow chart illustrating the method of arranging the generator 10 within the nacelle 3 according to the present invention.

The method being in a first step 100, to position a generator 10 within the nacelle 3 of a wind turbine.

To 110 arrange the generator 10 within the nacelle 3 such that the rotor 11 tilts in the absence of gravity and load

## Claims

1. Wind turbine (1) comprising a nacelle (3) and a wind rotor (5) with blades (3), and where a generator (10) comprising a rotor (11) connected to the wind rotor (5) and a stator (12) is positioned within the nacelle (3), **characterized in that**, the generator (10) is mounted such that the rotor (11) is positioned eccentric relative to the stator (12) in the absence of gravity and load.

2. Wind turbine (1) according to claim 1, wherein the rotor (11) is mounted such that it in the absence of gravity and load it is positioned eccentric but is concentric under the presence of gravity but no load.

3. Wind turbine (1) according to claim 1, wherein the rotor (11) is mounted such that it in the absence of gravity and load the eccentricity is ensured by the rotor (11) tilting reversely to the tilt induced by the presence of gravity.

4. Wind turbine (1) according to claim 1 or 3, wherein the rotor (11) is mounted such that it in the absence of gravity and load it tilts reversely to the tilt induced in the presence of gravity, but in the presence of gravity, the rotor (11) is substantially eccentric to the stator (12).

5. Wind turbine (1) according to claim 1, 2, 3 or 4, wherein the eccentricity of rotor (11) relative to the stator 12 is achieved by adjusting the segment during tightening by eccentricity-adjusting means.

6. Wind turbine (1) according to claim 1, 2, 3 or 4, wherein the eccentricity of the rotor (11) relative to the stator 12 is ensured by machining a fixed shaft recess with eccentricity instead of concentricity.

7. Method to mount a generator (10) in the nacelle (3) of a wind turbine (1), the generator (10) comprising a rotor (11) connected to a wind rotor (5) with blades (4) and a stator (12), and where the method includes for the generator (10) to be positioned within the nacelle (3), such that the rotor (11) tilts in the absence of gravity and load.

8. Method according to claim 7, wherein the rotor (11) is mounted such that it in the absence of gravity and load it tilts reversely to the tilt induced in the presence of gravity.

9. Method according to claim 7 or 8, wherein the rotor (11) is mounted such that in the absence of gravity and load tilts reversely to the tilt induced by the presence of gravity, but in the presence of gravity the stator (12) is substantially eccentric to the rotor (11).

10. Method according to claim 7, 8 or 9, wherein the tilting of rotor (11) relative to the stator 12 is achieved by adjusting the segment during tightening by tilt-adjusting means.

11. Method according to claim 7, 8 or 9, wherein the tilting of rotor (11) relative to the stator 12 is ensured by machining a fixed shaft recess with eccentricity instead of concentricity.
